# EUROPEAN PATENT APPLICATION

(11) **EP 4 768 638 A1**
(43) Date of publication of application: **01.07.2026**
(21) Application number: 25206791.3
(22) Date of filing: 06.10.2025
(51) Int. Cl.: C25D 1/04, H01M 4/66

(54) **COPPER FOIL, ELECTRODE COMPRISING THE SAME AND SECONDARY BATTERY COMPRISING THE SAME**

(30) Priority: 30.12.2024 KR 20240201187
(71) Applicant: SK Nexilis Co., Ltd., Jeollabuk-do 56137 (KR)
(72) Inventor: JIN, Shan Hua, Jeongeup-si 56137 (KR); KIM, Taeyeong, Jeongeup-si 56137 (KR); YOO, Ilhwan, Jeongeup-si 56137 (KR)
(74) Representative: Prüfer & Partner mbB Patentanwälte · Rechtsanwälte

(57) **Abstract**

One embodiment of the present disclosure provides a copper foil including a copper film having a matte surface and a shiny surface; and a protective layer disposed on the copper film, wherein the copper foil has a compressive elastic strain index of 10 to 30 GPa. The compressive elastic strain index is measured using a nano-indenter.

## Description

### BACKGROUND

### Field of the Invention

The present disclosure relates to a copper foil, an electrode including the same, a secondary battery including the same, and a method of manufacturing the same. More particularly, the present disclosure relates to a copper foil having improved corrosion resistance, an electrode including the same, a secondary battery including the same, and a method of manufacturing the same.

### Discussion of the Related Art

A secondary battery is a type of energy conversion device that changes electrical energy into chemical energy, stores the chemical energy, and then generates electricity by converting the chemical energy back into electrical energy when electricity is needed. The secondary battery has been used as an energy source for portable home appliances such as cell phones, laptop computers, and the like, as well as electric vehicles. The secondary battery is also called a "rechargeable battery" because it can be repeatedly charged.

Secondary batteries that have economic and environmental advantages over disposable primary batteries include lead storage batteries, nickel-cadmium secondary batteries, nickel-metal hydride secondary batteries, lithium secondary batteries, and the like.

In particular, lithium secondary batteries may store a relatively larger amount of energy relative to their size and weight compared to other secondary batteries. Therefore, the lithium secondary batteries are preferred in the field of information and communication devices whose portability and mobility are important, and their application range is also expanding to energy storage devices for hybrid and electric vehicles.

Lithium secondary batteries are used repeatedly by performing charging and discharging as one cycle. When any device is operated with a fully charged lithium secondary battery, the lithium ion secondary battery must have a high charge/discharge capacity in order to increase the operating time of the device. Therefore, research is continuously required to satisfy the ever-increasing needs of consumers regarding the charge/discharge capacity of lithium secondary batteries.

In particular, it has been proposed to use, as an anode active material, a composite active material in which Si or Sn is added to a carbon active material in order to increase the capacity of a lithium secondary battery, but such a composite active material has a relatively large coefficient of thermal expansion compared to conventional anode active materials. The rapid shrinkage and expansion of the composite active material due to the charging and discharging of the lithium secondary battery promotes the separation of the electrolytic copper foil and the anode active material, thereby reducing the charge and discharge capacity retention rate of the lithium secondary battery. Also, when the electrolytic copper foil is coated with the anode active material and then dried at a high temperature, the surface of the electrolytic copper foil is oxidized, thereby promoting the detachment of the anode active material. The weaker the adhesive strength between the copper foil and the anode active material, the more seriously the charge and discharge capacity retention rate of the lithium secondary battery is reduced.

When the charge/discharge capacity of a secondary battery decreases rapidly (i.e., a secondary battery has a low capacity retention rate or short lifespan) as the charge/discharge cycle is repeated, consumers will need to replace the secondary battery frequently, which will result in consumer inconvenience and waste of resources.

### SUMMARY

Accordingly, the present disclosure relates to a copper foil capable of preventing the problems caused by the limitations and disadvantages of the related art described above, an electrode including the same, a secondary battery including the same, and a method of manufacturing the same.

According to one embodiment of the present disclosure, there is provided a copper foil having improved adhesion to an active material and a compressive elastic strain index of 10 to 30 GPa.

According to one embodiment of the present disclosure, there is provided a copper foil having excellent charge/discharge characteristics and a compressive elastic strain index of 10 to 30 GPa.

According to another embodiment of the present disclosure, there is provided an electrode for a secondary battery including the copper foil, and a secondary battery including the electrode for a secondary battery.

According to still another embodiment of the present disclosure, there is provided a method of manufacturing a copper foil having improved adhesion to an active material, comprising: preparing an electrolyte including copper ions; forming a copper film; and forming a protective layer on the copper film, wherein the forming of the copper film comprises: showering the surface of a rotary cathode drum with a detergent; and forming a copper film on the rotary cathode drum by conducting current between an anode plate and the rotary cathode drum, which are arranged spaced apart from each other in the electrolyte in an electrolytic cell, the electrolyte includes: 70 to 150 g/L of copper ions; 80 to 130 g/L of sulfuric acid; 15 to 25 ppm of chlorine (Cl); and an organic additive, the organic additive includes a brightener (component A), a moderator (component B), and a roughness regulator (component C), and the brightener (component A) includes sulfonic acid or a metal salt thereof and has a concentration of 1 to 15 ppm, the moderator (component B) includes a non-ionic water-soluble polymer and has a concentration of 0.1 to 15 ppm, and the roughness regulator (component C) includes a nitrogen-containing heterocyclic quaternary ammonium salt or a derivative thereof and has a concentration of 1 to 15 ppm.

According to yet another embodiment of the present disclosure, the detergent includes 8% (w/w) to 12% (w/w) of sulfuric acid and 0.1% (w/w) to 0.3% (w/w) of a brightener (component A), and the brightener (component A) in the detergent includes sulfonic acid or a metal salt thereof.

In addition to the aspects of the present disclosure described above, other features and advantages of the present disclosure will be described hereinafter or will be clearly understood from such description by those skilled in the art to which the present disclosure pertains.

One embodiment of the present disclosure provides a copper foil including a copper film having a matte surface and a shiny surface; and a protective layer disposed on the copper film, wherein the copper foil has a compressive elastic strain index of 10 to 30 GPa. The compressive elastic strain index is measured using a nano-indenter.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure. In the drawings:
FIG. 1 is a cross-sectional view of a copper foil according to one embodiment of the present disclosure;
FIG. 2 is a cross-sectional view of a copper foil according to another embodiment of the present disclosure;
FIG. 3 is a cross-sectional view of an electrode for a secondary battery according to still another embodiment of the present disclosure;
FIG. 4 is a cross-sectional view of an electrode for a secondary battery according to yet another embodiment of the present disclosure;
FIG. 5 is a schematic cross-sectional view of a secondary battery according to yet another embodiment of the present disclosure; and
FIG. 6 shows a device for manufacturing a copper foil according to yet another embodiment of the present disclosure.

### DETAILED DESCRIPTION OF THE DISCLOSURE

Hereinafter, embodiments of the present disclosure will be described in detail with reference to the accompanying drawings. However, it should be understood that the embodiments described below are presented only for illustrative purposes to facilitate a clear understanding of the present disclosure, and are not intended to limit the scope of the present disclosure.

Shapes, sizes, ratios, angles, numbers, and the like disclosed in the drawings for describing the embodiments of the present disclosure are illustrative, and thus the present disclosure is not limited to the details illustrated in the drawings. Throughout the present specification, the same components may be referred to by the same reference numerals. In describing the present disclosure, detailed descriptions of related known technologies will be omitted when it is determined that they may unnecessarily obscure the gist of the present disclosure.

When terms "including," "having," "consisting of," and the like described in the present specification are used, other parts may be added unless the term "only" is used herein. When a component is expressed in the singular form, it includes the plural form unless otherwise particularly specified. In interpreting the component, it is also interpreted as including an error range even when not explicitly stated.

In describing a positional relationship, for example, when the positional relationship of two parts is described as being "on," "above," "below, "next to," or the like, unless the expression "immediately" or "directly" is used, one or more other parts may be located between the two parts.

Spatially relative terms, such as "below," "beneath," "lower," "above," "upper," and the like, may be used herein to describe the relationship of one element or component to another element(s) or component(s) as shown in the drawings. It will be understood that the spatially relative terms are intended to include different orientations of an element in use or operation in addition to the orientation shown in the drawings. For example, when an element shown in the drawing is turned over, an element described as being "above" or "upper" relative to another element will then be "below" or "lower" relative to the other element. Thus, the exemplary term "below" may include both above and below orientations. Likewise, the exemplary terms "above" or "upper" may include both above and below orientations.

In describing a temporal relationship, for example, when the temporal relationship is described as being "after," "subsequent," "next," "prior to," or the like, unless the expression "immediately" or "directly" is used, it may include cases that are not continuous.

In order to describe various components, terms such as "first," "second," and the like are used, but these components are not limited by these terms. These terms are only used to distinguish one component from another component. Therefore, a first component described hereinafter may also be a second component within the technical spirit of the present disclosure.

The term "at least one" should be understood to include all combinations that may be presented from one or more related items. For example, the meaning of "at least one of first, second, and third items" may mean not only each of the first, second or third items, but also all combinations of items that can be presented from two or more of the first, second and third items.

The terms "a matte surface" and "a shiny surface" may respectively mean relatively matte surface and relatively shiny surface when comparing both surfaces.

Respective features of various embodiments of the present disclosure may be partially or wholly coupled to or combined with each other, and may be technically linked and driven in various ways. The embodiments of the present disclosure may be carried out independently of each other, or may be carried out together in a related relationship.

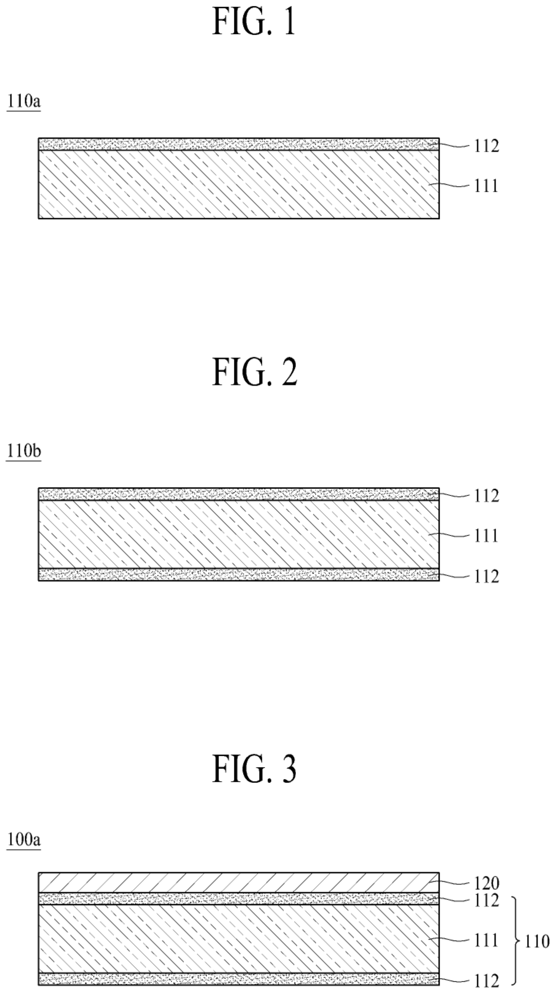

FIG. 1 is a cross-sectional view of a copper foil 110a according to one embodiment of the present disclosure.

Referring to FIG. 1, the copper foil 110a of the present disclosure includes a copper film 111 containing 99.9% by weight or more of copper. Referring to FIG. 1, the copper foil 110a of the present disclosure includes a copper film 111 and a protective layer 112 disposed on the copper film 111. FIG. 1 shows that the protective layer 112 is disposed on one surface of the copper film 111. One embodiment of the present disclosure is not limited thereto, and the protective layer 112 may be disposed on both surfaces of the copper film 111 (see FIG. 2).

The copper film 111 may be formed on a rotary cathode drum through electroplating, and may have a shiny surface that comes into direct contact with the rotary cathode drum during the electroplating process and a matte surface opposite to the shiny surface.

The protective layer 112 may be formed by electrodepositing an anticorrosion material on the copper film 111. The anticorrosion material may include at least one of a chromium compound, a silane compound, and a nitrogen compound. The protective layer 112 prevents oxidation and corrosion of the copper film 111 and improves heat resistance, thereby extending the lifespan of the copper foil 110 itself as well as the lifespan of the final product including the copper foil.

The copper foil 110 described hereinafter may correspond to the copper foils 110a and 110b according to FIGS. 1 and 2.

According to one embodiment of the present disclosure, the copper foil 110 may have a compressive elastic strain index (E_{IT}) of 10 to 30 GPa. Specifically, when the compressive elastic strain index (E_{IT}) of the copper foil 110 is 10 to 30 GPa, the copper foil 110 may have stability under external pressure and excellent adhesion to an active material.

The compressive elastic strain index (E_{IT}) may be considered as the bulk modulus. The compressive elastic strain index (E_{IT}) is a value of property indicating the degree to which copper foil resists volume deformation within its elastic range when subjected to external pressure. In other words, the compressive elastic deformation index (E_{IT}) may be described as the degree to which copper foil resists deformation when compressed within its elastic range. The compressive elastic deformation index is proportional to a ratio (dP/dV) of the rate of pressure change (dP) to the rate of volume change (dV). In detail, the compressive elastic strain index (E_{IT}) may correspond to a value obtained by dividing a rate of pressure change by a rate of volume change (dP/dV) for a specific volume of copper foil within its elastic deformation range.

When the compressive elastic strain index (E_{IT}) of the copper foil is less than 10 GPa, the copper foil 110 may be excessively deformed when an external force is applied to the copper foil, which may result in reduced mechanical stability of the copper foil. Also, physical changes occur repeatedly during the charging and discharging process in a lithium secondary battery. In this case, when the compressive elastic strain index (E_{IT}) of the copper foil is less than 10 GPa, the adhesion to the active material may be reduced.

Also, when the compressive elastic strain index (E_{IT}) of the copper foil is greater than 30 GPa, a problem of the copper foil hardly being elastically deformed under external pressure may occur. For example, since a copper foil having a compressive elastic strain index (E_{IT}) exceeding 30 GPa hardly deforms, fine cracks or peeling is highly likely to occur in the copper foil when pressure or impact is continuously applied. This may cause mechanical defects in the copper foil during long-term use.

According to the present disclosure, the compressive elastic strain index (E_{IT}) is measured using a nano-indenter.

According to the present disclosure, the compressive elastic strain index (E_{IT}) is measured under the following conditions:
- Temperature: 23 ± 2°C
- Humidity: 45 ± 5% R.H.
- Manufacturer: Helmut Fischer
- Model Name: HM 2000
- Load: 8 mN
- Load Increase Time: 10 sec
- Unload Increase Time: 10 sec
- Creep Time: 3 sec
- Indenter Type: Vickers Indenter (Correction Factor: 0.75)

According to the present disclosure, the compressive elastic strain index (E_{IT}) may be related to the elastic properties among the elasticity and plasticity of the copper foil 110.

According to one embodiment of the present disclosure, the copper foil 110 may have a Martin hardness (H_{M}) of 600 to 1,000 MPa. Specifically, when the Martin hardness (H_{M}) of the copper foil 110 is 600 to 1,000 MPa, the copper foil 110 may have stability under external pressure and excellent adhesion to an active material.

Martin hardness (H_{M}), which is also known as a Martens Hardness, represents a combined elastic and plastic properties of a material in response to indentation. Martin hardness (H_{M}) is determined from the value provided by the load/indentation depth curve in a test where an indenter is used to indent copper foil until a specified test load is reached. Martin hardness (H_{M}) may correspond to a value obtained by dividing a load (or force) applied to the copper foil by the indentation area formed in the copper foil when the specified test load is reached during an indentation test.

When the Martin hardness (H_{M}) of the copper foil is less than 600 MPa, the copper foil 110 may be excessively deformed when an external force is applied to the copper foil, which may result in reduced mechanical stability of the copper foil. Also, physical changes occur repeatedly during the charging and discharging process in a lithium secondary battery. In this case, when the Martin hardness (H_{M}) of the copper foil is less than 600 MPa, the adhesion to the active material may be reduced.

Also, when the Martin hardness (H_{M}) of the copper foil is greater than 1,000 MPa, a problem of the copper foil hardly being elastically deformed under external pressure may occur. For example, since a copper foil having a compressive Martin hardness (H_{M}) exceeding 1,000 MPa hardly deforms, fine cracks or peeling is highly likely to occur in the copper foil when pressure or impact is continuously applied. This may cause mechanical defects in the copper foil during long-term use.

According to the present disclosure, the Martin hardness (H_{M}) is measured by a nano-indenter. The Martin hardness (H_{M}) according to the present disclosure is measured by the same measuring method as the compressive elastic strain index (E_{IT}).

According to the present disclosure, a higher Martin hardness (H_{M}) value may mean that the copper foil 110 according to the present disclosure has a greater ability to resist indentation, and a lower Martin hardness (H_{M}) value may mean that the copper foil 110 according to the present disclosure is easily deformed by indentation.

The Martin hardness (H_{M}) according to the present disclosure is Martens hardness, which may represent the composite physical properties of elasticity and plasticity for indentation.

According to one embodiment of the present disclosure, the copper foil 110 may have an indentation hardness (H_{IT}) in the range of 1,000 to 1,500 MPa. Specifically, when the indentation hardness (H_{IT}) of the copper foil 110 is 1,000 to 1,500 MPa, the copper foil 110 may have stability under external pressure and excellent adhesion to an active material.

In detail, plastic deformation refers to a phenomenon that a material undergoes a permanent change in shape under applied force and does not return to its original state, and indentation hardness (H_{IT}) of the present invention is a property indicating how well a copper foil resists permanent deformation (plastic deformation) when subjected to force or pressure. Indentation hardness (H_{IT}) is evaluated by measuring a depth to which an indenter presses into the copper foil surface or a size of the indentation. The indentation hardness (H_{IT}) of the present invention may be referred to as a pressure represented by MPa at which the copper foil undergoes plastic deformation in a process of measuring a degree of plastic deformation by applying pressure to the copper foil, using a nano indenter.

When the indentation hardness (H_{IT}) of the copper foil is less than 1,000 MPa, the copper foil 110 may be excessively deformed when an external force is applied to the copper foil, which may result in reduced mechanical stability of the copper foil. Also, physical changes occur repeatedly during the charging and discharging process in a lithium secondary battery. In this case, when the indentation hardness (H_{IT}) of the copper foil is less than 1,000 MPa, the adhesion to the active material may be reduced.

Also, when the indentation hardness (H_{IT}) of the copper foil is greater than 1,500 MPa, a problem of the copper foil hardly being elastically deformed under external pressure may occur. For example, since a copper foil having an indentation hardness (H_{IT}) exceeding 1,500 MPa hardly deforms, fine cracks or peeling is highly likely to occur in the copper foil when pressure or impact is continuously applied. This may cause mechanical defects in the copper foil during long-term use.

According to the present disclosure, the indentation hardness (H_{IT}) is measured using a nano-indenter. The indentation hardness (H_{IT}) according to the present disclosure is measured by the same measuring method as the compressive elastic strain index (E_{IT}).

According to the present disclosure, a higher indentation hardness (H_{IT}) value may mean that the copper foil 110 according to the present disclosure has a greater ability to resist permanent deformation, and a lower indentation hardness (H_{IT}) value may mean that the copper foil 110 according to the present disclosure is more prone to permanent deformation.

The indentation hardness (H_{IT}) according to the present disclosure may be related to the plasticity properties among the elasticity and plasticity of the copper foil 110.

According to one embodiment of the present disclosure, the copper foil 110 may have a Vickers hardness (H_{V}) in the range of 80 to 150 Hv. Specifically, when the Vickers hardness (H_{V}) of the copper foil 110 is 80 to 150 Hv, the copper foil 110 may have stability under external pressure and excellent adhesion to an active material.

Vickers hardness (H_{V}) is a measure that determines a limit of deformation when a scratch or a compressive force is applied to copper foil. Vickers hardness (H_{V}) is evaluated based on a surface area of a indentation mark created by pressing an indenter (e.g., a diamond square pyramid) into the copper foil. Vickers hardness (H_{V}) may be calculated by dividing the applied test load (F) by the indentation area. The measurement may be as follows: 1) using an indenter (e.g., a diamond indenter shaped like a square pyramid with a 136° main angle), press the copper foil with a specified load (F) and maintain it for a set duration. 2) after removing the load, measure the resulting indentation (pyramid-shaped indentation mark) on the copper foil (using a microscope), and 3) measure a diagonal length of the indentation to calculate the residual indentation area, and then, divide the applied test load (F) by the indentation area to calculate the Vickers hardness (H_{V}) value.

When the Vickers hardness (H_{V}) of the copper foil is less than 80 Hv, the copper foil 110 may be excessively deformed when an external force is applied to the copper foil, which may result in reduced mechanical stability of the copper foil. Also, physical changes occur repeatedly during the charging and discharging process in a lithium secondary battery. In this case, when the Vickers hardness (H_{V}) of the copper foil is less than 80 Hv, the adhesion to the active material may be reduced.

Also, when the Vickers hardness (H_{V}) of the copper foil is greater than 150 Hv, a problem of the copper foil hardly being elastically deformed under external pressure may occur. For example, since a copper foil having a Vickers hardness (HV) exceeding 150 Hv hardly deforms, fine cracks or peeling is highly likely to occur in the copper foil when pressure or impact is continuously applied. This may cause mechanical defects in the copper foil during long-term use.

According to the present disclosure, the Vickers hardness (H_{V}) is measured using a nano-indenter. The Vickers hardness (H_{V}) according to the present disclosure is measured by the same measuring method as the compressive elastic strain index (E_{IT}).

According to the present disclosure, a higher Vickers hardness (H_{V}) value may mean that the copper foil 110 according to the present disclosure has a greater ability to resist indentation, and a lower Vickers hardness (H_{V}) value may mean that the copper foil 110 according to the present disclosure is easily deformed by indentation.

When a copper foil is used as a current collector in a secondary battery, it is necessary for the copper foil to expand and contract in response to the heat generated within the battery and the expansion and contraction of the electrode active material. When the copper foil easily expands and contracts, the copper foil can be prevented from being peeled off or separating from the active material. The performance of the secondary battery, for example, a charge-discharge capacity retention, is maintained when the copper foil is not detached from or peeled off from the active material. In addition, it is necessary for the copper foil to possess a certain strength to support the active material and ensure durability.

The present invention introduces the following criteria for determining whether copper foil can contract and expand sufficiently for application in secondary batteries while also possessing the durability and strength required for active material support. The compressive elastic strain index (E_{IT}), Martin hardness (H_{M}), indentation hardness (H_{IT}), and Vickers hardness (H_{V}) are introduced in the present invention as criteria for determining whether the copper foil can expand and contract sufficiently for application in secondary batteries while also possessing the durability and strength required to support the active material. Each of the above properties serves as a criterion for identifying the characteristics of the copper foil, and a combination thereof can also provide a comprehensive criterion for identifying the characteristics of the copper foil.

According to one embodiment of the present disclosure, the copper foil 110 has a thickness of 3 to 35 µm. When the copper foil 110 is used as a current collector of an electrode in the secondary battery, the thinner the copper foil 110, the more current collectors may be accommodated in the same space, which is advantageous for increasing the capacity of the secondary battery. However, the manufacture of a copper foil 110 having a thickness of less than 3 µm causes a decrease in workability.

On the other hand, when a secondary battery is manufactured with a copper foil 110 having a thickness of greater than 35 µm, it is difficult to achieve high capacity due to the thick copper foil 110.

Hereinafter, an electrode 100 including the copper foil 110 of the present disclosure and a secondary battery including the electrode 100 will be described in detail.

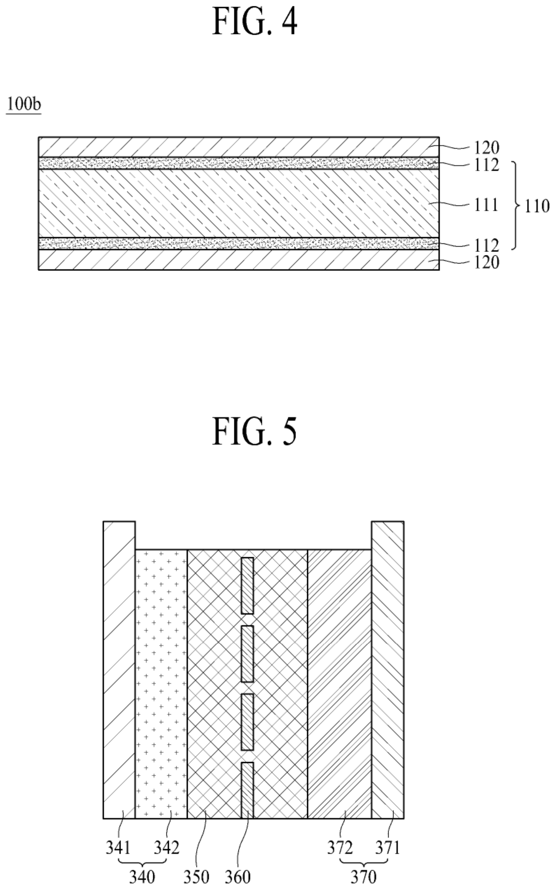

FIG. 3 is a cross-sectional view of an electrode 100a for a secondary battery according to one embodiment of the present disclosure. FIG. 4 is a cross-sectional view of an electrode 100b for a secondary battery according to another embodiment of the present disclosure.

As shown in FIG. 3, the electrode 100a for a secondary battery according to one embodiment of the present disclosure includes the copper foil 110 according to of any one of the embodiments of the present disclosure described above, and an active material layer 120.

FIG. 3 shows a configuration in which the active material layer 120 is formed on one surface of the copper foil 110, but one embodiment of the present disclosure is not limited thereto. Referring to FIG. 4, the active material layer 120 may be formed on both surfaces of the copper foil 110.

In lithium secondary batteries, an aluminum foil is generally used as a cathode current collector combined with a cathode active material, and a copper foil 110 is generally used as an anode current collector combined with an anode active material.

According to one embodiment of the present disclosure, the electrode 100 for a secondary battery is an anode, and the copper foil 110 is used as an anode current collector. In this case, the active material layer 120 includes an anode active material.

To secure the high capacity of the secondary battery, the active material layer 120 of the present disclosure may be formed of a composite of carbon and a metal. The metal may include, for example, at least one of Si, Ge, Sn, Li, Zn, Mg, Cd, Ce, Ni, and Fe, preferably Si and/or Sn.

FIG. 5 is a schematic cross-sectional view of a secondary battery according to one embodiment of the present disclosure.

Referring to FIG. 5, the secondary battery includes a cathode 370, an anode 340, an electrolyte 350 disposed between the cathode 370 and the anode 340 to provide an environment in which ions can move, and a separator 360 configured to electrically insulate the anode 370 and the cathode 340. Here, the ions moving between the cathode 370 and the anode 340 are, for example, lithium ions. The separator 360 separates the cathode 370 and the anode 340 to prevent the charges generated at one electrode from being consumed unnecessarily by moving to the other electrode through the inside of the secondary battery 105. Referring to FIG. 5, the separator 360 is disposed within the electrolyte 350.

The cathode 370 includes a cathode current collector 371 and a cathode active material layer 372. Here, an aluminum foil may be used as the cathode current collector 371.

The anode 340 includes an anode current collector 341 and an anode active material layer 342. Here, the copper foil 110 may be used as the anode current collector 341.

According to one embodiment of the present disclosure, the copper foil 110 shown in FIGS. 1 and 2 may be used as the anode current collector 341. Also, the electrode 100a or 100b for a secondary battery shown in FIG. 3 or 4 may be used as the anode 340 of the secondary battery shown in FIG. 5.

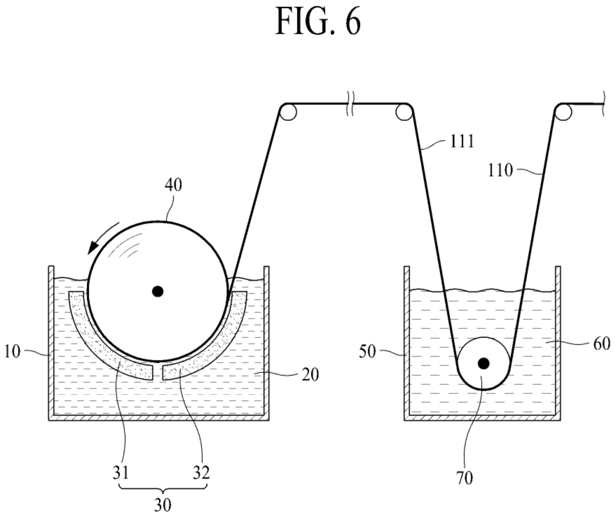

Hereinafter, a method of manufacturing a copper foil 110 of the present disclosure will be described in detail with reference to FIG. 6.

The method of manufacturing a copper foil 110 of the present disclosure includes: forming a copper film 111; and forming a protective layer 112 on the copper film 111.

The method of the present disclosure includes: forming a copper film 111 on a rotary cathode drum 40 by conducting current between an anode plate 30 and the rotary cathode drum 40, which are spaced apart from each other in an electrolyte 20 within an electrolytic cell 10.

As shown in FIG. 6, the anode plate 30 may include first and second anode plates 31 and 32 that are electrically insulated from each other.

The forming of the copper film 111 may be performed by forming a seed layer by conducting current between the first anode plate 31 and the rotary cathode drum 40, and then growing the seed layer by conducting current between the second anode plate 32 and the rotary cathode drum 40.

The current density provided by each of the first and second anode plates 31 and 32 may be 40 to 130 ASD (A/dm²).

When the current density provided by each of the first and second anode plates 31 and 32 is less than 40 ASD, the adhesive strength between the copper foil 110 and the active material layer 120 may not be sufficient due to the low surface roughness of the copper foil 110.

On the other hand, when the current density provided by each of the first and second anode plates 31 and 32 is greater than 130 ASD, the coating of the active material may not be smoothly performed due to the rough surface of the copper foil 110.

The surface properties of the copper film 111 may vary depending on the degree of surface buffing or polishing of the rotary cathode drum 40. For example, the surface of the rotary cathode drum 40 may be polished with a polishing brush having a grit of #800 to #3000.

In the process of forming the copper film 111, the electrolyte 20 is maintained at a temperature of 40 to 65°C. More specifically, the temperature of the electrolyte 20 may be maintained at 45°C or higher. At this time, the physical, chemical, and electrical properties of the copper film 111 may be controlled by adjusting the composition of the electrolyte 20.

According to one embodiment of the present disclosure, the electrolyte 20 may include copper ions, sulfuric acid, chlorine, and an organic additive.

To facilitate the formation of the copper film 111 through the electrodeposition of copper, the concentration of copper ions and the concentration of sulfuric acid in the electrolyte 20 are adjusted to 70 to 150 g/L and 80 to 130 g/L, respectively.

According to one embodiment of the present disclosure, chlorine (Cl) includes both chloride ions (Cl-) and chlorine atoms present in the molecule. Chlorine (Cl) may be used, for example, to remove silver (Ag) ions introduced into the electrolyte 20 during the process of forming the copper film 111. Specifically, chlorine (Cl) may precipitate silver (Ag) ions in the form of silver chloride (AgCl). This silver chloride (AgCl) may be removed by filtration.

When the concentration of chlorine (Cl) is less than 15 ppm, the removal of silver (Ag) ions is not smoothly performed. On the other hand, when the concentration of chlorine (Cl) is greater than 25 ppm, an unnecessary reaction caused by excessive chlorine (Cl) may occur. Therefore, the concentration of chlorine (Cl) in the electrolyte 20 is controlled to be in the range of 15 to 25 ppm.

According to one embodiment of the present disclosure, the electrolyte 20 may include an organic additive.

The organic additive included in the electrolyte 20 includes a brightener (component A), a moderator (component B), and a roughness regulator (component C).

The brightener (component A) includes sulfonic acid or a metal salt thereof. The brightener (component A) may have a concentration of 1 to 15 ppm in the electrolyte 20.

The brightener (component A) increases the quantity of electric charge in the electrolyte 20, thereby increasing the deposition speed of copper, improving the curling characteristics of the copper foil, and enhancing the gloss of the copper foil 110. When the concentration of the brightener (component A) is less than 1 ppm, the gloss of the copper foil 110 deteriorates. On the other hand, when the concentration of the brightener (component A) is greater than 15 ppm, the weight or the surface roughness of the copper foil 110 may change after immersion.

The brightener may include, for example, at least one of bis-(3-sulfopropyl)-disulfide disodium salt, 3-mercapto-1-propanesulfonic acid, 3-(N,N-dimethylthiocarbamoyl)-thiopropanesulfonate sodium salt, 3-[(amino-iminomethyl)thio]-1-propanesulfonate sodium salt, o-ethyldithiocarbonato-S-(3-sulfopropyl)-ester sodium salt, 3-(benzothiazolyl-2-mercapto)-propyl-sulfonic acid sodium salt, and ethylenedithiodipropylsulfonic acid sodium salt.

The moderator (component B) includes a non-ionic water-soluble polymer. The moderator (component B) may have a concentration of 0.1 to 15 ppm in the electrolyte 20.

The moderator (component B) reduces the deposition speed of copper to prevent a rapid increase in roughness and a decrease in strength of the copper foil 110. This moderator (component B) is also called an inhibitor or suppressor.

When the concentration of the moderator (component B) is less than 0.1 ppm, the roughness of the copper foil 110 may increase rapidly, and a problem of a change in the surface state of the copper foil 110 may occur. On the other hand, even when the concentration of the moderator (component B) is greater than 15 ppm, there are almost no changes in the physical properties of the copper foil 110, such as appearance, gloss, roughness, strength, elongation, and the like. Therefore, the concentration of the moderator (component B) may be adjusted to a range of 0.1 to 15 ppm without unnecessarily increasing the concentration of the moderator (component B), which increases manufacturing cost and wastes raw materials.

The moderator (component B) may include at least one non-ionic water-soluble polymer selected from, for example, polyethylene glycol (PEG), polypropylene glycol, a polyethylene polypropylene copolymer, polyglycerin, polyethylene glycol dimethyl ether, hydroxyethylene cellulose, polyvinyl alcohol, stearic acid polyglycol ether, and stearyl alcohol polyglycol ether. However, the type of moderator is not limited thereto, and other non-ionic water-soluble polymers that may be used for the manufacture of a high-strength copper foil 110 may be used as the moderator.

The roughness regulator (component C) includes a nitrogen-containing heterocyclic quaternary ammonium salt or a derivative thereof.

The roughness regulator (component C) improves the gloss and flatness of the copper foil 110. The roughness regulator (component C) may have a concentration of 1 to 15 ppm in the electrolyte 20.

When the concentration of the roughness regulator (component C) is less than 1 ppm, the problem occurs in which the gloss and flatness improvement effects of the copper foil 110 do not appear. On the other hand, when the concentration of the roughness regulator (component C) is greater than 15 ppm, the surface gloss of the copper foil 110 may become uneven and the surface roughness of the copper foil 110 may rapidly increase.

The roughness regulator (component C) may include any one of compounds represented by the following Chemical Formulas 1 to 5.

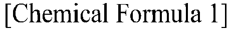

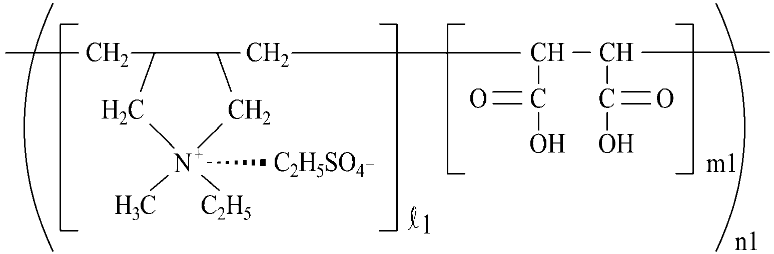

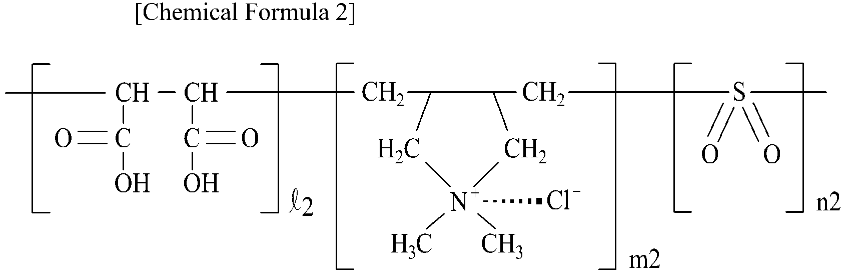

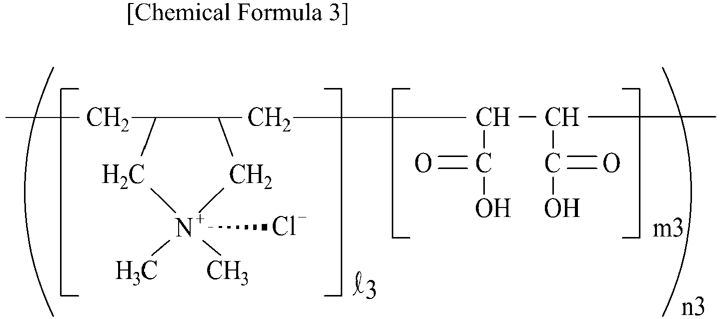

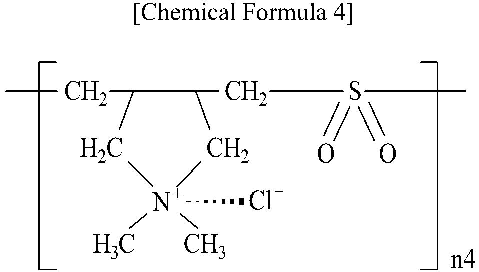

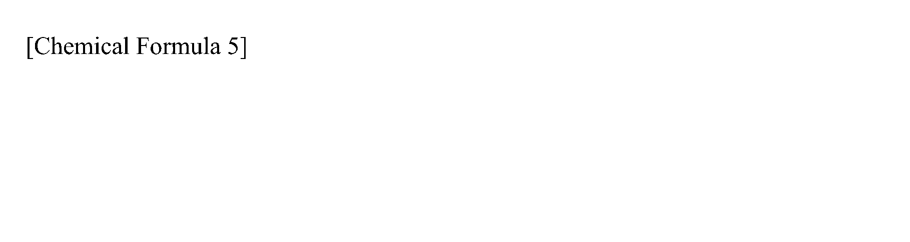

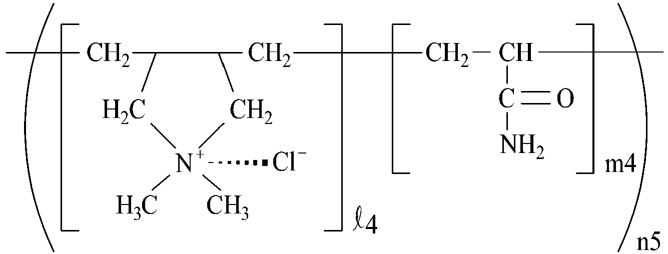

In Chemical Formulas 1 to 5, ℓ1 to ℓ4, ml to m4, and n1 to n5 each represent a repeating unit and are integers greater than or equal to 1, which may be the same or different from each other.

According to one embodiment of the present disclosure, each of the compounds represented by Chemical Formulas 1 to 5 has a number average molecular weight of 500 to 12,000.

When the number average molecular weight of the compounds represented by Chemical Formulas 1 to 5 used as the roughness regulator is less than 500, the ratio of monomers may increase, thereby increasing the surface roughness of the copper foil 110. When the content of the roughness regulator is low, the surface roughness of the copper film 111 may increase, which results in deteriorated gloss and flatness.

When the number average molecular weight of the compounds represented by Chemical Formulas 1 to 5 is greater than 12,000, the deviation in surface roughness of the copper foil 110 increases. In this case, it is difficult to suppress the deviation in surface roughness of the copper foil 110 from increasing even when the concentration of other additives is adjusted.

The compounds represented by Chemical Formulas 1 to 5 may be, for example, manufactured by polymerization or copolymerization using diallyl dimethyl ammonium chloride (DDAC).

The compound represented by Chemical Formula 1 includes, for example, PAS-2451 (Mw: 30,000, Nittobo Corporation), and the like.

The compound represented by Chemical Formula 2 includes, for example, PAS-84 (Mw: 20,000, Nittobo Corporation), and the like.

The compound represented by Chemical Formula 3 includes, for example, PAS-2351 (Mw: 25,000, Nittobo Corporation), and the like.

The compound represented by Chemical Formula 4 includes, for example, PAS-A-1 (Mw: 5,000, Nittobo Corporation), PAS-A-5 (Mw: 4,000, Nittobo Corporation), and the like.

The compound represented by Chemical Formula 5 includes, for example, PAS-J-81 (Mw: 180,000, Nittobo Corporation), and the like.

When the copper film 111 is formed, the flow rate of the electrolyte 20 supplied into the electrolytic cell 10 may be 41 to 45 m3/hour.

According to one embodiment of the present disclosure, before the copper film 111 is formed on the rotary cathode drum 40 by immersing the rotary cathode drum 40 in the electrolyte 20 prepared as described above, the surface of the rotary cathode drum 40 may be showered or washed using a detergent.

According to the present disclosure, the detergent is an aqueous solution including 8% (w/w) to 12% (w/w) of sulfuric acid and 0.1% (w/w) to 0.3% (w/w) of the brightener (component A). In this case, the brightener (component A) may include any one of the types of brighteners (component A) described above.

According to the present disclosure, when the surface of the rotary cathode drum 40 is showered using the detergent, sulfuric acid in the detergent reacts with oxides present on the surface of the rotary cathode drum 40 to effectively dissolve or remove the oxides.

Also, titanium (Ti) may be present on the surface of the rotary cathode drum 40 from which the oxides have been removed. When the titanium (Ti) present on the surface of the rotary cathode drum 40 is exposed to air, an oxide film may be formed on the surface of the rotary cathode drum 40. Since such a titanium oxide film has insulating properties, the titanium oxide film may impede the flow of current, which may make it difficult to achieve uniform current distribution in an electroplating process. Also, when the titanium oxide film becomes thick, the surface of the rotary cathode drum 40 becomes irregular, which may make it impossible to maintain the desired thickness and flatness during the plating process.

At this time, the brightener (component A) in the detergent may coat the surface of the rotary cathode drum 40 before titanium (Ti) present on the surface of the rotary cathode drum 40 is exposed to air. As a result, it is possible to prevent the titanium oxide film from being formed on the surface of the rotary cathode drum 40.

That is, when the surface of a rotary cathode drum 40 is not showered or washed with a detergent before the rotary cathode drum 40 is immersed in an electrolyte 20 to form a copper film 111 on the rotary cathode drum 40, the surface of the manufactured copper foil may be irregular and more defects may be present in the copper foil. As a result, the copper foil may have a compressive elastic strain index that is outside the range of 10 to 30 GPa.

Therefore, in order for the copper foil 110 to have a compressive elastic strain index in the range of 10 to 30 GPa, it is necessary to shower or wash the surface of the rotary cathode drum 40 using a detergent before the rotary cathode drum 40 is immersed in the electrolyte 20 to form a copper film 111 on the rotary cathode drum 40.

According to the present disclosure, in order for the copper foil 110 to have a compressive elastic strain index in the range of 10 to 30 GPa, a brightener (component A) in the detergent needs to be maintained at a concentration in the range of 0.1% (w/w) to 0.3% (w/w).

When the concentration of the brightener (component A) in the detergent is less than 0.1% (w/w), the pretreatment effect on the rotating cathode drum 40 may not be sufficient due to the insufficient amount of the brightener (component A) in the detergent. As a result, more defects may be present in the copper foil, and the copper foil may have a compressive elastic strain index that is outside the range of 10 to 30 GPa.

Also, when the concentration of the brightener (component A) in the detergent is greater than 0.3% (w/w), the brightener (component A) may be excessively adsorbed onto the rotary cathode drum 40. When a large amount of the brightener (component A) is adsorbed onto the rotary cathode drum 40 as described above, the brightener (component A) occupies the space in which other organic additives are to be adsorbed onto the rotary cathode drum 40. Thus, the opportunity for other organic additives to be adsorbed onto the rotary cathode drum 40 is reduced. An appropriate adsorption balance between the organic additives must be maintained in order to obtain the physical properties of the copper foil 110 according to the present disclosure. In this case, when the brightener (component A) is excessively adsorbed onto the rotary cathode drum 40, this balance may be broken. That is, the gloss of the copper foil may be improved, but a moderator (component B) and a roughness regulator (component C), which improve the surface properties of the copper foil, may not be sufficiently adsorbed onto the rotary cathode drum 40, which may cause problems such as deterioration of the surface properties of the copper foil. As a result, more defects may be present in the copper foil, and the copper foil may have a compressive elastic strain index that is outside the range of 10 to 30 GPa.

According to the present disclosure, in order for the copper foil 110 to have a compressive elastic strain index in the range of 10 to 30 GPa, sulfuric acid in the detergent needs to be maintained at a concentration in the range of 8% (w/w) to 12% (w/w).

When the concentration of sulfuric acid in the detergent is less than 8% (w/w), the sulfuric acid may not have a sufficient effect in reacting with oxides present on the surface of the rotary cathode drum 40 to dissolve or remove the oxides. Therefore, the surface of the manufactured copper foil may be irregular, and more defects may be present in the copper foil. As a result, the copper foil may have a compressive elastic strain index that is outside the range of 10 to 30 GPa.

Also, when the concentration of sulfuric acid in the detergent is greater than 12% (w/w), the sulfuric acid may be present at a high concentration on the surface of the rotary cathode drum 40, thereby excessively increasing the current density, which may make it difficult to obtain a copper foil with the desired quality. In addition, when the concentration of sulfuric acid in the detergent is excessive, uneven defects may appear on the surface of the copper foil, which may make it difficult to obtain the physical properties of the copper foil 110 according to the present disclosure. Therefore, the surface of the manufactured copper foil may be irregular, and more defects may be present in the copper foil. As a result, the copper foil may have a compressive elastic strain index that is outside the range of 10 to 30 GPa.

According to the present disclosure, even when the surface of the rotary cathode drum 40 is showered with a detergent, the brightener (component A) in the electrolyte 20 may have a concentration of 1 to 15 ppm, and the sulfuric acid may have a concentration of 70 to 150 g/L.

To ensure the cleanliness of the electrolyte 20, a copper wire (Cu wire), which is the raw material for the electrolyte 20, may be cleaned.

According to one embodiment of the present disclosure, the preparing of the electrolyte 20 may include: heat-treating a copper wire; cleaning the heat-treated copper wire with an acid; cleaning the acid-cleaned copper wire with water, and introducing the water-cleaned copper wire into sulfuric acid for an electrolyte.

More specifically, in order to maintain the cleanliness of the electrolyte 20, a high-purity (99.9% or higher) copper wire is heat-treated in an electric furnace at 750°C to 850°C to burn off various organic impurities on the copper wire. Then, the heat-treated copper wire is cleaned with a 10% sulfuric acid solution for 10 to 20 minutes, and the acid-treated copper wire is cleaned using distilled water. Through these sequential processes, copper for manufacturing the electrolyte 20 may be prepared. The water-cleaned copper wire may be mixed with sulfuric acid for an electrolyte to prepare the electrolyte 20.

The copper film 111 manufactured in this way may be cleaned in a cleaning tank.

For example, acid cleaning to remove impurities, such as resin components or natural oxides, on the surface of the copper film 111 and water cleaning to remove the acid solution used in the acid cleaning may be performed sequentially. The cleaning process may be omitted.

Next, a protective layer 112 is formed on the copper film 111.

Referring to FIG. 6, the method of the present disclosure may further include immersing the copper film 111 in an anticorrosion solution 60. When the copper film 111 is immersed in the anticorrosion solution 60, the copper film 111 may be guided by a guide roll disposed in the anticorrosion solution 60.

As described above, the anticorrosion solution 60 may include at least one of a chromium compound, a silane compound, and a nitrogen compound. For example, the copper film 111 may be immersed in 1 to 10 g/L of a potassium dichromate solution at room temperature for 1 to 30 seconds.

Meanwhile, the protective layer 112 may include a silane compound by silane treatment, and may also include a nitrogen compound by nitrogen treatment.

The copper foil 110 is formed by forming such a protective layer 112.

An electrode (i.e., an anode) for a secondary battery of the present disclosure may be manufactured by coating one or more anode active materials selected from the group consisting of carbon; a metal (Me) of Si, Ge, Sn, Li, Zn, Mg, Cd, Ce, Ni, or Fe; an alloy including the metal (Me); an oxide (MeOx) of the metal (Me); and a composite of the metal (Me) and carbon on one or both surfaces of the copper foil 110 of the present disclosure manufactured through the method described above.

For example, 1 to 3 parts by weight of styrene-butadiene rubber (SBR) and 1 to 3 parts by weight of carboxymethyl cellulose (CMC) are mixed with 100 parts by weight of carbon for an anode active material, and then distilled water serving as a solvent was added to the mixture to prepare a slurry. Thereafter, the slurry is applied onto the copper foil 110 to a thickness of 20 to 60 µm using a doctor blade, and pressed at a pressure of 0.5 to 1.5 ton/cm2 at 110 to 130°C.

A secondary battery may be manufactured using the electrode (anode) for a secondary battery of the present disclosure manufactured through the above-described method, together with a conventional cathode, electrolyte, and separator.

Hereinafter, the present disclosure will be described in detail with reference to examples and comparative examples. However, it should be understood that the examples described below are only provided to aid in understanding the present disclosure, and are not intended to limit the scope of the present disclosure.

### Examples 1 to 4

A copper foil was manufactured using a plating machine including an electrolytic cell 10, a rotary cathode drum 40 disposed in the electrolytic cell 10, and an anode plate 30 disposed spaced apart from the rotary cathode drum 40. An electrolyte 20 is a copper sulfate solution. The concentration of copper ions in the electrolyte 20 was set to 87 g/L, the concentration of sulfuric acid was set to 110 g/L, the temperature of the electrolyte was set to 55°C, and the current density was set to 60 ASD.

Also, the concentration of chlorine (Cl) included in the electrolyte 20 was maintained at 20 ppm, and the concentrations of the organic additives are as shown in Table 1 below.

Among the organic additives, a bis-(3-sulfopropyl)-disulfide disodium salt (SPS) was used as a brightener (component A), polyethylene glycol (PEG) was used as a moderator (component B), and a trimethylethylammonium ethyl sulfide maleic acid copolymer (PAS-2451TM, Nittobo, Mw.: 30,000) was used as a roughness regulator (component C).

Before immersing the rotary cathode drum 40 in the electrolyte 20, the surface of the rotary cathode drum 40 was washed using a detergent. An aqueous solution including sulfuric acid and a brightener (component A) was used as the detergent. A bis-(3-sulfopropyl)-disulfide disodium salt (SPS) was used as the brightener (component A) in the detergent. The concentrations of sulfuric acid and the brightener (component A) in the detergent are as shown in Table 1 below.

A copper film 111 was manufactured by applying a current at a current density of 60 ASD between the rotary cathode drum 40 and the anode plate 30. Next, the copper film 111 was immersed in an anticorrosion solution for approximately 2 seconds, and chromate treatment was performed on both surfaces of the copper film 111 to form a protective layer 112, thereby manufacturing a copper foil. An anticorrosion solution containing chromic acid as a main component was used as the anticorrosion solution, and the concentration of chromic acid was 5 g/L.

As a result, the copper foils of Examples 1 to 4 were manufactured. At this time, the manufactured copper foils had a thickness of 8 µm.

### Comparative Examples 1 and 2

The concentrations of organic additives, whether the drum was washed, and the concentration of the brightener in the detergent are as shown in Table 1 below.

Copper foils of Comparative Examples 1 and 2 were manufactured in the same manner as in Examples 1 to 4. At this time, the manufactured copper foils had a thickness of 8 µm.

### Comparative Examples 3 and 4

The concentrations of organic additive and whether the drum was washed are as shown in Table 1 below.

Copper foils were manufactured in the same manner as in Examples 1 to 4, except that the surface of the rotary cathode drum 40 was showered with a detergent before immersing the rotary cathode drum 40 in the electrolyte 20 to form a copper film 111 on the rotary cathode drum 40. At this time, the manufactured copper foils had a thickness of 8 µm.

**[Table 1]**

| | SPS (ppm) | PEG (ppm) | PAS-2451 (ppm) | Whether the drum is washed | Sulfuric acid in detergent (%) | Brightener in detergent (%) |
|---|---|---|---|---|---|---|
| Example 1 | 10 | 10 | 13 | O | 8 | 0.15 |
| Example 2 | 11 | 6 | 8 | O | 10 | 0.2 |
| Example 3 | 12 | 6 | 8 | O | 11 | 0.3 |
| Example 4 | 10 | 4 | 3 | O | 12 | 0.1 |
| Comparative Example 1 | 10 | 0 | 0.1 | O | 5 | 0.01 |
| Comparative Example 2 | 11 | 6 | 5 | O | 15 | 0.5 |
| Comparative Example 3 | 12 | 6 | 5 | X | - | - |
| Comparative Example 4 | 10 | 16 | 17 | X | - | - |

**[Table 2]**

| Classification | Compressive elastic strain index (GPa) | Martin hardness (MPa) | Indentation hardness (MPa) | Vickers hardness (Hv) |
|---|---|---|---|---|
| Example 1 | 18.8 | 835 | 1377 | 130.1 |
| Example 2 | 27.3 | 895 | 1287 | 121.6 |
| Example 3 | 17.9 | 682 | 1035 | 97.8 |
| Example 4 | 13.6 | 616 | 1045 | 98.7 |
| Comparative Example 1 | 8.3 | 480 | 1015 | 81 |
| Comparative Example 2 | 9.4 | 605 | 954 | 85 |
| Comparative Example 3 | 32.0 | 831 | 1421 | 161 |
| Comparative Example 4 | 30.9 | 1051 | 1681 | 168 |

**[Table 3]**

| Classification | Peel strength (N/mm²) | Capacity retention rate (%) |
|---|---|---|
| Example 1 | 25.0 | 93 |
| Example 2 | 24.9 | 94 |
| Example 3 | 25.1 | 95 |
| Example 4 | 24.8 | 95 |
| Comparative Example 1 | 11.2 | 89 |
| Comparative Example 2 | 11.1 | 88 |
| Comparative Example 3 | 10.9 | 87 |
| Comparative Example 4 | 12.1 | 88 |

For the copper foils of Examples 1 to 4 and Comparative Examples 1 to 4 manufactured as described above, i) the compressive elastic strain index, ii) the peel strength, and iii) the capacity retention rate were confirmed.

Samples with dimensions of 10 cm x 10 cm were obtained by cutting the copper foils.

### i) Compressive elastic strain index (E_{IT})

The compressive elastic strain index (E_{IT}) is measured using a nano-indenter. The specific measurement conditions are as follows.
- Temperature: 23 ± 2°C
- Humidity: 45 ± 5% R.H.
- Manufacturer: Helmut Fischer
- Model Name: HM 2000
- Load: 8 mN
- Load Increase Time: 10 sec
- Unload Increase Time: 10 sec
- Creep Time: 3 sec
- Indenter Type: Vickers Indenter (Correction Factor: 0.75)

### ii) Martin hardness (H_{M})

The Martin hardness (H_{M}) is measured using a nano-indenter. The specific measurement conditions are the same as those for the measurement of the compressive elastic strain index (E_{IT}).

### iii) Indentation hardness (H_{IT})

The indentation hardness (H_{IT}) is measured using a nano-indenter. The specific measurement conditions are the same as those for the measurement of the compressive elastic strain index (E_{IT}).

### iv) Vickers hardness (H_{V})

The Vickers hardness (H_{V}) is measured using a nano-indenter. The specific measurement conditions are the same as those for the measurement of the compressive elastic strain index (E_{IT}).

### v) Peel strength

2 parts by weight of a styrene-butadiene rubber (SBR) and 2 parts by weight of carboxymethyl cellulose (CMC) were mixed with 100 parts by weight of carbon commercially available for use as an anode active material. Thereafter, distilled water serving as a solvent was added to the mixture to prepare a slurry. Using a doctor blade, the slurry was applied to the surface of a copper foil (width: 10 cm) to a thickness of approximately 60 µm, dried at 120°C for 10 minutes, and then pressed (pressure: 1 ton/cm²) to manufacture an anode.

After the active material attachment surface of an anode sample (width: 12.7 mm) was attached with double-sided tape, the peel strength between the copper foil and the active material was measured by peeling the copper foil at an angle of 90° using a universal testing machine (UTM) according to the IPC-TM-650 standard (measurement speed: 50 mm/min).

### vi) Capacity retention rate

2 parts by weight of a styrene-butadiene rubber (SBR) and 2 parts by weight of carboxymethyl cellulose (CMC) were mixed with 100 parts by weight of carbon commercially available for use as an anode active material. Thereafter, distilled water serving as a solvent was added to the mixture to prepare a slurry. Using a doctor blade, the slurry was applied to the surface of an electrolytic copper foil (width: 10 cm) to a thickness of approximately 60 µm, dried at 120°C for 10 minutes, and then pressed (pressure: 1 ton/cm2) to manufacture an anode.

Lithium manganese oxide (Li1.1Mn1.85Al0.05O4) and lithium manganese oxide having an orthorhombic crystal structure (o-LiMnO2) were mixed in a weight ratio of 90:10 to prepare a cathode active material. The cathode active material, carbon black, and polyvinylidene fluoride (PVDF) were mixed in NMP, which is an organic solvent, in a weight ratio of 85:10:5 to prepare a slurry. The slurry was applied to both surfaces of an aluminum foil having a thickness of 20 µm, and then dried to manufacture a cathode.

Also, a basic electrolyte was prepared by dissolving 1 M LiPF6 as a solute in a non-aqueous organic solvent in which ethylene carbonate (EC) and ethyl methyl carbonate (EMC) were mixed in a weight ratio of 1:2. Thereafter, 99.5% by weight of the basic electrolyte and 0.5% by weight of succinic anhydride were mixed to prepare an electrolyte.

A secondary battery was manufactured using the cathode, anode, and electrolyte manufactured as described above.

Next, for the secondary battery manufactured as described above, the capacity per g of the cathode was measured at a charge operating voltage of 4.3 V and a discharge operating voltage of 3.4 V, and a charge/discharge experiment was performed 50 times at a charge/discharge rate of 0.2 C at 50°C. Then, the capacity retention rate of the secondary battery was calculated according to Equation 1 below. Capacity retention rate (%) = (Discharge capacity at 50 times/Discharge capacity at 1 time) × 100

Referring to Tables 1 to 3, since the compressive elastic strain index satisfied the range of 10 to 30 GPa in the copper foils according to Examples 1 to 4, the capacity retention rate of the secondary battery satisfied 90% or more. However, since the compressive elastic strain index did not satisfy the range of 10 to 30 GPa in the copper foils according to Comparative Examples 1 to 4, the peel strength between the copper foil and the active material was so low that the peel strength did not even reach 13 N/mm². As a result, the capacity retention rate of the secondary battery did not satisfy 90%, which is required in the industry.

The copper foil according to one embodiment of the present disclosure can have a compressive elastic strain index of 10 to 30 GPa, thereby improving the adhesion to an active material.

The copper foil according to one embodiment of the present disclosure can have a compressive elastic strain index of 10 to 30 GPa, and thus can have excellent charge/discharge characteristics.

It will be apparent to those skilled in the art to which the present disclosure pertains that the present disclosure described above is not limited to the above-described embodiments and the accompanying drawings and that various substitutions, modifications, and variations are possible without departing from the spirit and scope of the present disclosure. Accordingly, the scope of the present disclosure is defined by the appended claims, and it is intended that all variations and modifications derived from the meaning, scope, and equivalent concepts of the claims fall within the scope of the present disclosure.

### [Brief Description of Main Parts]

100: electrode for secondary battery
110, 110a, 110b: copper foil
111: copper film
112: protective layer
120: active material layer
10: electrolytic cell
20: electrolyte

## Claims

1. A copper foil comprising:
a copper film having a matte surface and a shiny surface; and
a protective layer disposed on the copper film,
wherein the copper foil has a compressive elastic strain index of 10 to 30 GPa, and
the compressive elastic strain index is measured using a nano-indenter.

2. The copper foil of claim 1, which has a Martin hardness in the range of 600 to 1,000 MPa,
wherein the Martin hardness is measured using a nano-indenter.

3. The copper foil of claim 1 or 2, which has an indentation hardness in the range of 1,000 to 1,500 MPa,
wherein the indentation hardness is measured using a nano-indenter.

4. The copper foil of any one claim of the preceding claims, which has a Vickers hardness in the range of 80 to 150 Hv,
wherein the Vickers hardness is measured using a nano-indenter.

5. The copper foil of any one claim of the preceding claims, wherein the protective layer includes at least one of a chromium compound, a silane compound, and a nitrogen compound.

6. An electrode including the copper foil according to any one of the preceding claims.

7. A secondary battery including the electrode according to claim 6.
